# EUROPEAN PATENT SPECIFICATION

(11) **EP 2 711 813 B1**
(45) Date of publication and mention of the grant of the patent: **05.08.2020**
(21) Application number: 12785357.0
(22) Date of filing: 06.04.2012
(51) Int. Cl.: G06F 3/048

(54) **INFORMATION PROCESSING DEVICE, METHOD FOR CONTROLLING INFORMATION PROCESSING DEVICE, PROGRAM, AND INFORMATION RECORDING MEDIUM**
INFORMATIONSVERARBEITUNGSVORRICHTUNG, VERFAHREN ZUR STEUERUNG DER INFORMATIONSVERARBEITUNGSVORRICHTUNG, PROGRAMM UND INFORMATIONSAUFZEICHNUNGSMEDIUM
DISPOSITIF DE TRAITEMENT D'INFORMATIONS, PROCÉDÉ DE COMMANDE DE DISPOSITIF DE TRAITEMENT D'INFORMATIONS, PROGRAMME ET SUPPORT D'ENREGISTREMENT D'INFORMATIONS

(30) Priority: 19.05.2011 JP 2011112157
(43) Date of publication of application: 26.03.2014
(73) Proprietor: Sony Interactive Entertainment Inc., Tokyo 108-0075 (JP)
(72) Inventor: YAMAMOTO, Hirotsugu, Tokyo 108-0075 (JP)
(74) Representative: Müller Hoffmann & Partner
(86) International application number: PCT/JP2012/059518
(87) International publication number: WO 2012/157367

(56) References cited:
- EP-A2- 2 068 237
- WO-A1-2006/096501
- JP-A- 2008 532 185
- JP-A- 2010 108 071
- JP-A- 2010 113 503
- JP-A- 2010 154 090
- JP-A- 2010 154 090
- US-A1- 2008 316 181
- US-A1- 2010 103 136

## Description

### [Technical Field]

The present invention relates to an information processing device, a control method of an information processing device, a program, and an information storing medium.

### [Background Art]

In recent years, various methods have been proposed as a method for carrying out operation input to an information processing device. In US 7088342 B, apparatus in which sensors are disposed on both surfaces of the apparatus and operation input by these both sensors is allowed is described. JP-2008328370-A discloses a mobile terminal having a plurality of sensors on its back side and on side surfaces in order to detect which hand (left/right) has grasped the device. JP-2008276974-A discloses a display being adapted to display two of its states in a sequential manner. JP-2008285363-A discloses a method for quickly changing a display in a mobile phone.

### [Summary]

### [Technical Problems]

For example, when a user holds, with the left hand, an information processing device in which a display and a touch sensor are disposed in an overlapped manner on the front surface and operates the touch sensor on the front surface side with a finger of the right hand, if information as a display target is displayed in the lower right area of the display, there is a high possibility that this information is hidden by the hand of the user and it is difficult for the user to see this information. On the other hand, when the user holds the above-described information processing device with the right hand and operates the touch sensor on the front surface side with a finger of the left hand, if information as a display target is displayed in the lower left area of the display, there is a high possibility that this information is hidden by the hand of the user and it is difficult for the user to see this information.

It is deemed that, as just described, the area that is difficult for the user to see in the display changes depending on the hand with which the user holds the information processing device. Therefore, it is convenient that the area in which information is not displayed in the display changes depending on the hand holding the information processing device.

Furthermore, it is deemed that, if the touch sensor is provided on the back surface of the information processing device, a detected position by this touch sensor can be utilized to estimate whether the user is holding the information processing device with the right hand or with the left hand for example. The touch sensor on the back surface of the information processing device seems to help control of the area in which information is not displayed in the display in this way.

The present invention is made in view of the above-described problem and one of objects thereof is to allow change of the area in which information as a display target is not displayed in a display according to a detected position by a touch sensor disposed opposed to a touch sensor that is so disposed as to be overlapped on the display.

### [Solution to Problems]

The above problem is solved by the claimed matter according to the independent claims.

Accordingly, an information processing device includes a display section, a front touch sensor that is so disposed as to be overlapped on the display section and detects the position of an object on a detection surface, a back touch sensor that is disposed opposed to the front touch sensor and detects the position of an object on a detection surface, and a control section. The control section identifies, as a prohibited area, one of two areas that each occupy part of the display section and are disposed on left and right sides based on at least one detected position by the back touch sensor, and the control section causes information as a display target to be displayed in an area outside the prohibited area in the display section.

Furthermore, a control method of an information processing device is a control method of an information processing device including a display section, a front touch sensor that is so disposed as to be overlapped on the display section and detects the position of an object on a detection surface, and a back touch sensor that is disposed opposed to the front touch sensor and detects the position of an object on a detection surface. The control method includes: identifying one of two areas that each occupy part of the display section and are disposed on left and right sides as a prohibited area based on at least one detected position by the back touch sensor; and causing information as a display target to be displayed in an area outside the prohibited area in the display section.

Moreover, a program is a program for an information processing device including a display section, a front touch sensor that is so disposed as to be overlapped on the display section and detects the position of an object on a detection surface, and a back touch sensor that is disposed opposed to the front touch sensor and detects the position of an object on a detection surface. The program causes the information processing device to carry out a step of identifying one of two prohibited areas that each occupy part of the display section and are disposed on left and right sides based on at least one detected position by the back touch sensor, and a step of causing information as a display target to be displayed in an area outside the identified prohibited area in the display section.

In addition, an information storing medium is a computer-readable information storing medium that stores a program for an information processing device including a display section, a front touch sensor that is so disposed as to be overlapped on the display section and detects the position of an object on a detection surface, and a back touch sensor that is disposed opposed to the front touch sensor and detects the position of an object on a detection surface. The program causes the information processing device to carry out a step of identifying one of two prohibited areas that each occupy part of the display section and are disposed on left and right sides based on at least one detected position by the back touch sensor, and a step of causing information as a display target to be displayed in an area outside the identified prohibited area in the display section.

According to the present invention, information as a display target is displayed in an area outside the prohibited area identified based on the detected position by the back touch sensor. Therefore, the area in which the information as a display target is not displayed in the display can be changed according to the detected position by the touch sensor disposed opposed to the touch sensor that is so disposed as to be overlapped on the display.

The correspondence relationship between the detected position by the back touch sensor and the prohibited area identified from the two areas may be reversed depending on whether the shorter-side direction of the display section is direction along the vertical direction or the longitudinal direction of the display section is direction along the vertical direction.

The control section can identify one of the two areas as the prohibited area based on whether one detected position by the back touch sensor exists in an area in the back touch sensor opposed to the left half of the front touch sensor or exists in an area in the back touch sensor opposed to the right half of the front touch sensor.

The control section can identify the area on the left side, of the two areas, as the prohibited area if one detected position by the back touch sensor exists in the area in the back touch sensor opposed to the left half of the front touch sensor, and identifies the area on the right side, of the two areas, as the prohibited area if not so.

In addition, the information processing device further can include a direction detector that detects the direction of the display section. The control section determines whether the longitudinal direction of the display section is direction along the vertical direction or the shorter-side direction of the display section is direction along the vertical direction based on a detection result by the direction detector. When it is determined that the shorter-side direction of the display section is direction along the vertical direction, the control section identifies the area on the left side, of the two areas as the prohibited area if one detected position by the back touch sensor exists in the area in the back touch sensor opposed to the left half of the front touch sensor, and identifies the area on the right side, of the two areas, as the prohibited area if not so. When it is determined that the longitudinal direction of the display section is direction along the vertical direction, the control section identifies the area on the right side, of the two areas, as the prohibited area if one detected position by the back touch sensor exists in the area in the back touch sensor opposed to the left half of the front touch sensor, and identifies the area on the left side, of the two areas, as the prohibited area if not so.

Furthermore, the control section can decide the positions of the two areas based on a detected position by the front touch sensor.

Moreover, the control section can decide an area in the display section located on the lower left side of the detected position by the front touch sensor as the area on the left side, of the two areas, and decides an area in the display section located on the lower right side of the detected position by the front touch sensor as the area on the right side, of the two areas.

In addition, if a plurality of pieces of information as display targets exist and the plurality of pieces of information are ordered, the control section can cause the plurality of pieces of information that are ordered to be displayed in a plurality of ordered areas obtained by dividing an area outside the prohibited area in the display section in such a manner that the order of the information corresponds to the order of the area.

### [Brief Description of Drawings]

[FIG. 1A]

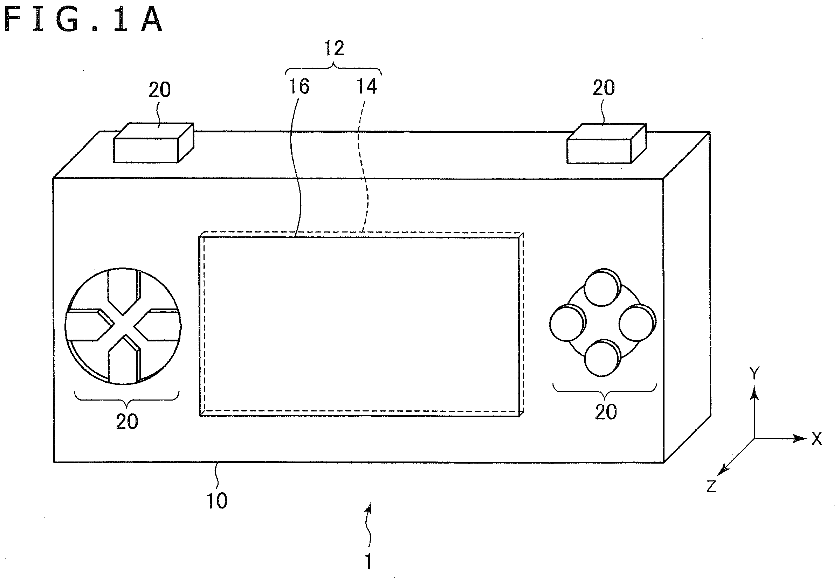

   FIG. 1A is a perspective view showing the appearance of an information processing device according to one embodiment of the present invention.
[FIG. 1B]

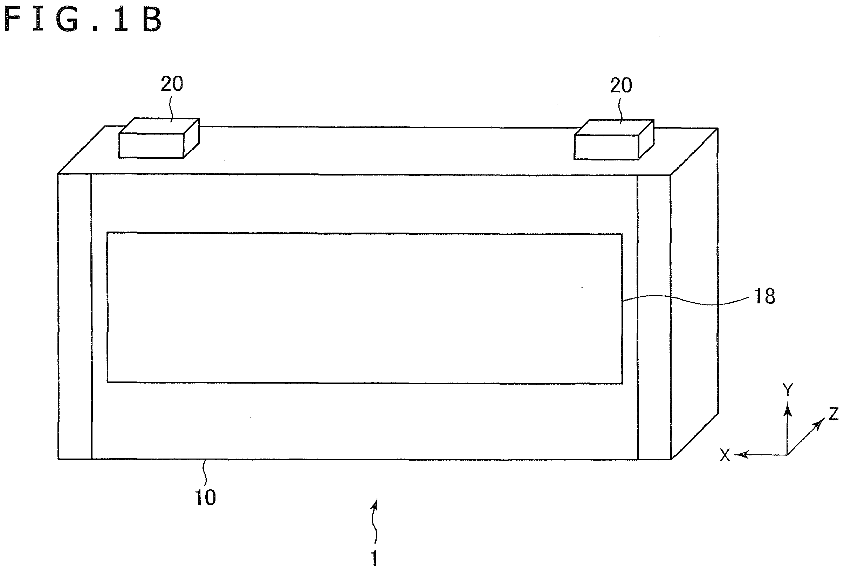

   FIG. 1B is a perspective view showing the appearance of the information processing device according to one embodiment of the present invention.
[FIG. 2]

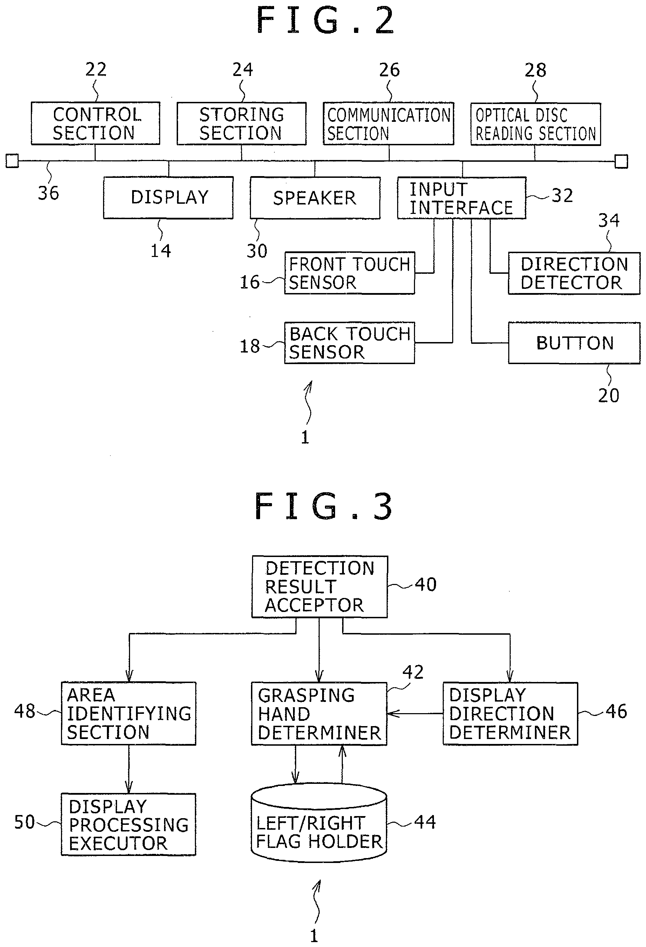

   FIG. 2 is a diagram showing one example of the hardware configuration of the information processing device according to one embodiment of the present invention.
[FIG. 3]
   FIG. 3 is a functional block diagram showing one example of functions realized by the information processing device according to one embodiment of the present invention.
[FIG. 4A]

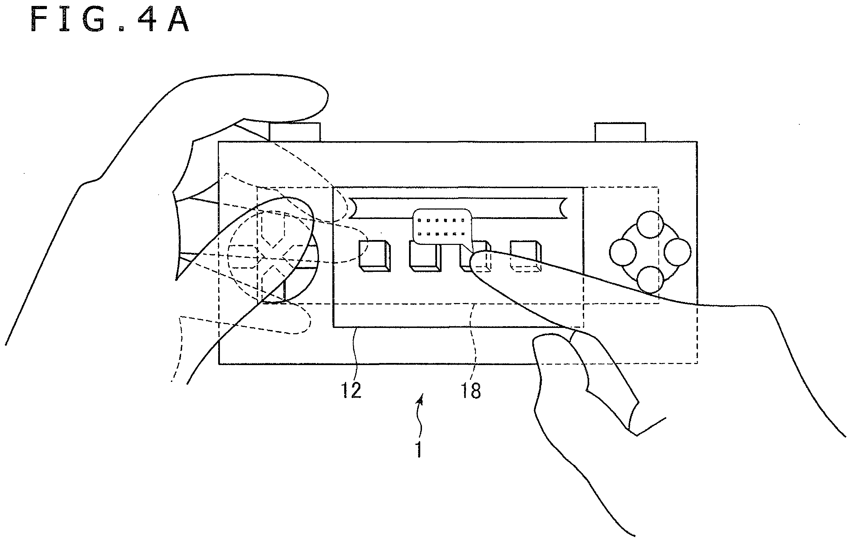

   FIG. 4A is a diagram showing one example of the state in which a user is grasping the information processing device laterally with the left hand.
[FIG. 4B]

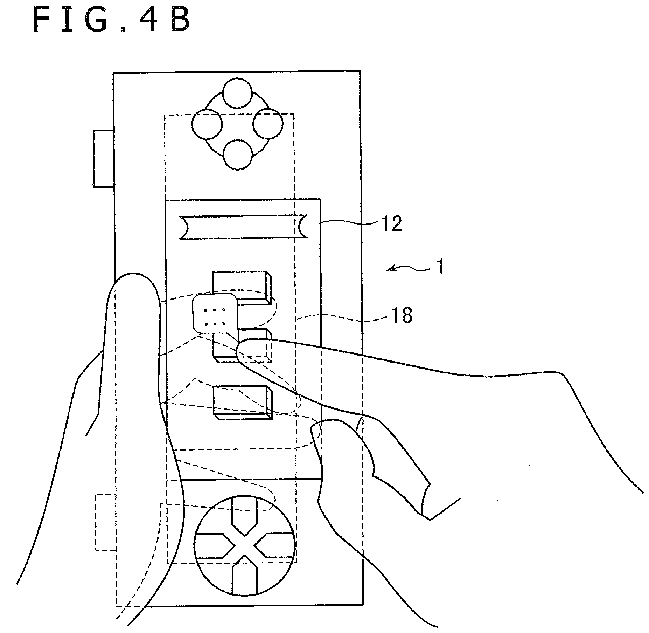

   FIG. 4B is a diagram showing one example of the state in which a user is grasping the information processing device longitudinally with the left hand.
[FIG. 4C]

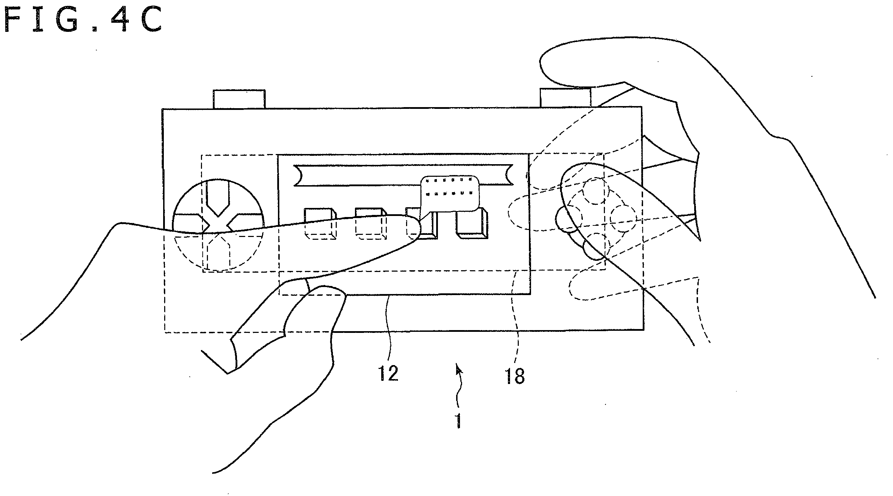

   FIG. 4C is a diagram showing one example of the state in which a user is grasping the information processing device laterally with the right hand.
[FIG. 4D]

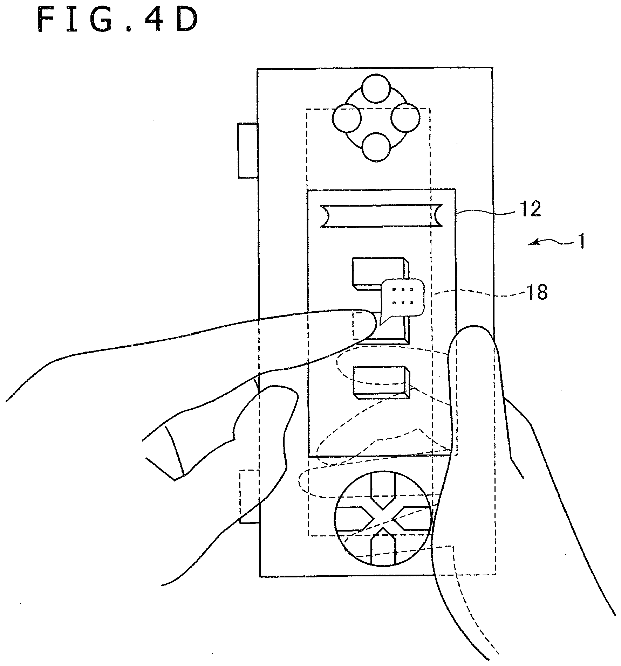

   FIG. 4D is a diagram showing one example of the state in which a user is grasping the information processing device longitudinally with the right hand.
[FIG. 5]

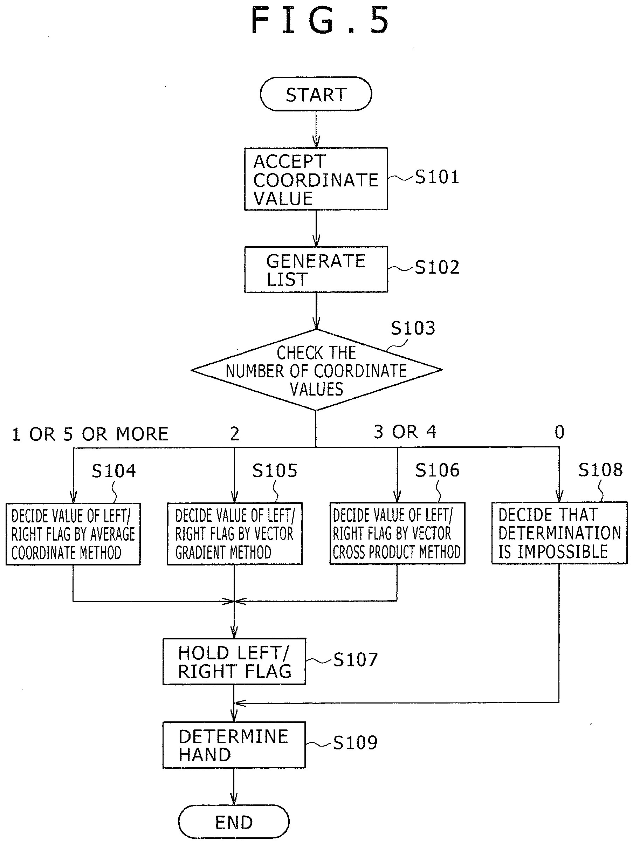

   FIG. 5 is a flow diagram showing one example of the flow of processing executed in the information processing device according to one embodiment of the present invention.
[FIG. 6A]

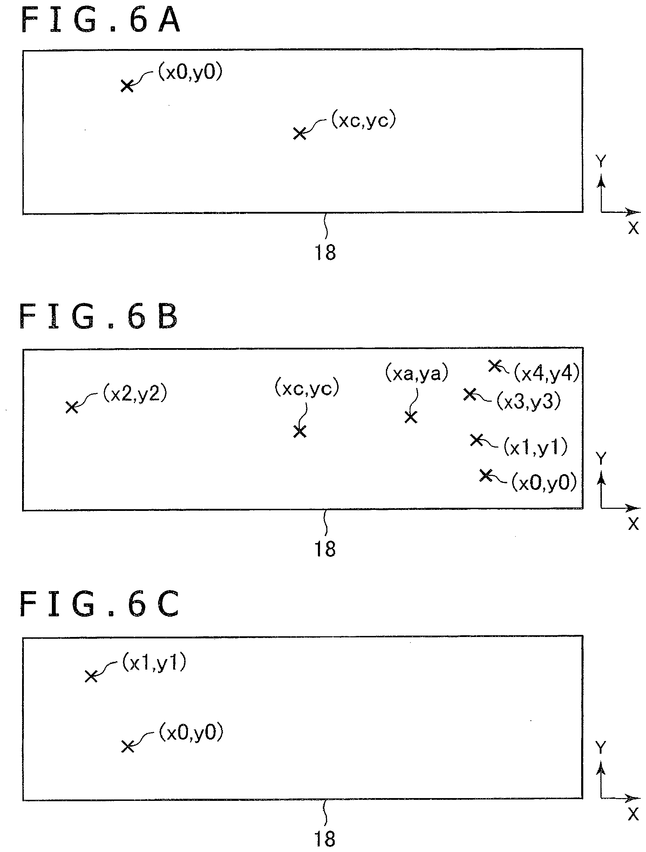

   FIG. 6A is an explanatory diagram of an average coordinate method.
[FIG. 6B]
   FIG. 6B is an explanatory diagram of the average coordinate method.
[FIG. 6C]
   FIG. 6C is an explanatory diagram of a vector gradient method.
[FIG. 6D]

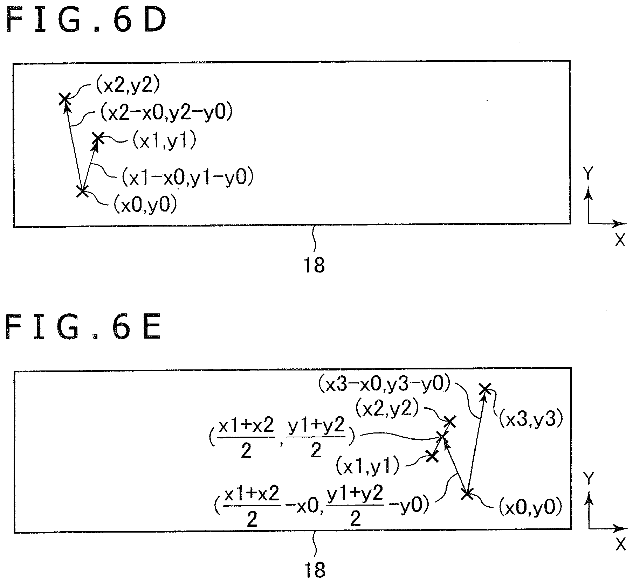

   FIG. 6D is an explanatory diagram of a vector cross product method.
[FIG. 6E]
   FIG. 6E is an explanatory diagram of the vector cross product method.
[FIG. 7A]

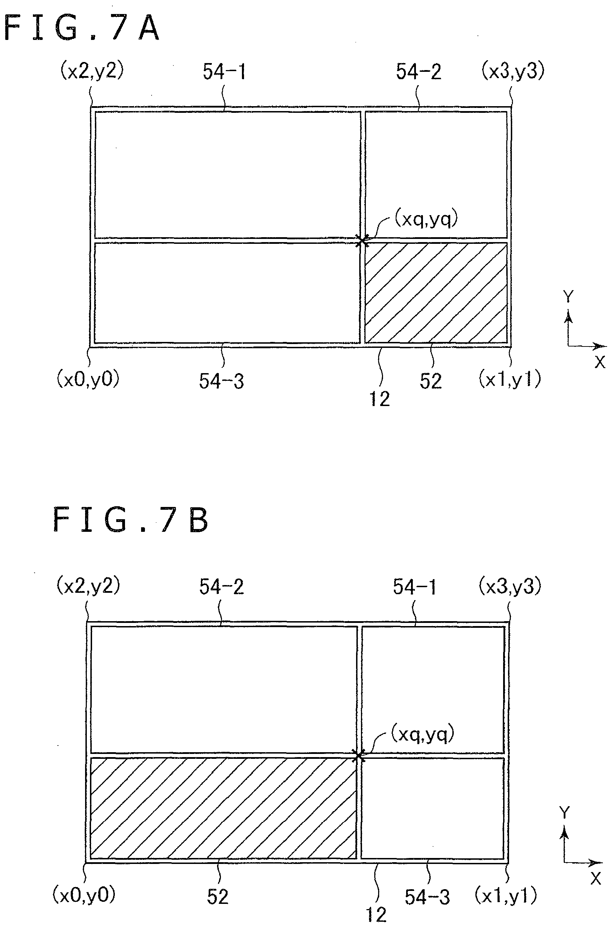

   FIG. 7A is a diagram showing one example of a prohibited area and priority areas.
[FIG. 7B]
   FIG. 7B is a diagram showing one example of the prohibited area and the priority areas.

### [Description of Embodiments]

An embodiment of the present invention will be described in detail below based on the drawings.

FIGS. 1A and 1B are perspective views showing the appearance of an information processing device 1 according to one embodiment of the present invention. FIG. 1A shows appearance when the information processing device 1 is viewed from the front surface side and FIG. 1B shows appearance when it is viewed from the back surface side. Suppose that the information processing device 1 according to the present embodiment is a portable device such as a portable game machine.

As shown in these diagrams, a chassis 10 of the information processing device 1 has a shape of a substantially rectangular flat plate as a whole. In the following, the horizontal direction (width direction) of the chassis 10 is defined as the X-axis direction. The vertical direction (height direction) is defined as the Y-axis direction and the thickness direction (depth direction) is defined as the Z-axis direction. Furthermore, in the present embodiment, the direction from the left to the right as viewed from the front surface of the chassis 10 is the X-axis positive direction. The direction from the lower side to the upper side as viewed from the front surface of the chassis 10 is the Y-axis positive direction. The direction from the back surface to the front surface of the chassis 10 is the Z-axis positive direction.

A touch panel 12 is provided on the front surface of the chassis 10. The touch panel 12 has a substantially rectangular shape and is so configured as to include a display 14 and a front touch sensor 16. The display 14 may be various kinds of image display devices, such as a liquid crystal display panel and an organic EL display panel.

The front touch sensor 16 is so disposed as to be overlapped on the display 14 and has a substantially rectangular detection surface with shape and size corresponding to the display surface of the display 14. Furthermore, in the present embodiment, the front touch sensor 16 sequentially detects the contact of an object such as a finger of a user and a stylus on this detection surface at a predetermined time interval. When detecting the contact of an object, the front touch sensor 16 detects the contact position of the object. The front touch sensor 16 does not necessarily detect the position of an object only when the object has gotten contact with the detection surface, and may detect the position of an object relative to the detection surface when the object has gotten close into the detectable range over the detection surface. Moreover, the front touch sensor 16 may be a device of any system such as capacitive system, pressure-sensitive system, and optical system as long as it is a device capable of detecting the position of an object on the detection surface. Suppose that, in the present embodiment, the front touch sensor 16 is a multi-point detecting touch sensor capable of detecting the contact of objects at plural places (e.g. at most eight places). Furthermore, the front touch sensor 16 may be a sensor capable of detecting the area of the part in contact with the detection surface, of an object (contact area) and the strength of pressing of the detection surface by the object (pressure).

Moreover, in the present embodiment, a back touch sensor 18 is disposed on the back surface side of the chassis 10 in such a manner as to be opposed to the front touch sensor 16. Furthermore, in the present embodiment, the back touch sensor 18 is so disposed that, as viewed from the front of the chassis 10, the left half of the back touch sensor 18 is opposed to the left half of the front touch sensor 16 and the right half of the back touch sensor 18 is opposed to the right half of the front touch sensor 16. This back touch sensor 18 has a substantially rectangular detection surface whose length in the X-axis direction is longer than that of the front touch sensor 16 and whose length in the Y-axis direction is shorter than that of the front touch sensor 16. Similarly to the front touch sensor 16, the back touch sensor 18 detects the position of an object on the detection surface at a predetermined time interval. That is, the display surface of the display 14, the detection surface of the front touch sensor 16, and the detection surface of the back touch sensor 18 are each disposed along the orientation parallel to the XY plane of the chassis 10 and are arranged in a straight line manner along the thickness direction of the chassis 10 (Z-axis direction). Suppose that, in the present embodiment, the back touch sensor 18 is a multi-point detecting touch sensor capable of detecting the contact of objects at plural places similarly to the front touch sensor 16. The back touch sensor 18 may be a sensor of various kinds of systems similarly to the front touch sensor 16. As long as the front touch sensor 16 and the back touch sensor 18 are disposed opposed to each other, it is not necessary that the length in the X-axis direction is longer in the back touch sensor 18 than in the front touch sensor 16 and the length in the Y-axis direction is shorter in the back touch sensor 18 than in the front touch sensor 16 as described above. For example, the front touch sensor 16 and the back touch sensor 18 may have shapes and sizes that are substantially identical to each other.

Furthermore, buttons 20 are provided on the front surface and upper surface of the information processing device 1 according to the present embodiment. In the present embodiment, about the front surface of the information processing device 1, four buttons 20 (direction button group) each associated with any direction of the upper, lower, left, and right directions are provided on the left side of the display 14, and four buttons 20 are provided on the right side of the display 14. Furthermore, on the upper surface of the information processing device 1, two buttons 20 are disposed on the left and right sides.

FIG. 2 is a configuration diagram showing one example of the hardware configuration of the information processing device 1 shown in FIGS. 1A and 1B. As shown in FIG. 2, the information processing device 1 is so configured as to include a control section 22, a storing section 24, a communication section 26, an optical disc reading section 28, a speaker 30, an input interface 32, and a direction detector 34 besides the display 14, the front touch sensor 16, the back touch sensor 18, and the buttons 20, which have been already explained. Furthermore, in the present embodiment, the display 14, the control section 22, the storing section 24, the communication section 26, the optical disc reading section 28, the speaker 30, and the input interface 32 are connected via an internal bus 36.

The control section 22 is e.g. a CPU or the like and executes various kinds of information processing in accordance with a program stored in the storing section 24. The storing section 24 is e.g. a memory element such as a RAM or ROM, a disc device, or the like and stores programs to be run by the control section 22 and various kinds of data. Furthermore, the storing section 24 functions also as a work memory of the control section 22. The communication section 26 is e.g. a network interface or the like (specifically, e.g. wireless LAN module) and transmits information to another information processing device 1, a server (not shown) on the Internet, etc. in accordance with an instruction input from the control section 22. In addition, this communication section 26 outputs received information to the control section 22. The optical disc reading section 28 reads program and data stored in an optical disc in accordance with an instruction from the control section 22. The information processing device 1 may be so configured as to be capable of reading program and data stored in another computer-readable information storing medium other than the optical disc. The speaker 30 outputs sounds to the external in accordance with an instruction accepted from the control section 22. The direction detector 34 is a sensor that detects the orientation of the chassis 10. In the present embodiment, the direction detector 34 is e.g. a three-axis acceleration sensor capable of detecting the orientation of the gravitational acceleration, and which orientation the chassis 10 is in with respect to the vertical direction can be detected by the direction detector 34. In the present embodiment, the direction detector 34 detects which orientation the chassis 10 is in with respect to the vertical direction at a predetermined time interval.

Furthermore, in the present embodiment, the front touch sensor 16, the back touch sensor 18, the direction detector 34, and the buttons 20 are connected to the input interface 32. Moreover, data exchange between the front touch sensor 16, the back touch sensor 18, the direction detector 34, or the buttons 20 and the control section 22 is carried out via the input interface 32.

FIG. 3 is a functional block diagram showing one example of functions realized by the information processing device 1 according to the present embodiment. As shown in FIG. 3, the information processing device 1 according to the present embodiment functions as a device including a detection result acceptor 40, a grasping hand determiner 42, a left/right flag holder 44, a display direction determiner 46, an area identifying section 48, and a display processing executor 50. The left/right flag holder 44 is realized mainly by the storing section 24. The detection result acceptor 40 is realized mainly by the control section 22, the front touch sensor 16, the back touch sensor 18, and the direction detector 34. The other elements are realized mainly by the control section 22. These elements are realized by running a program installed in the information processing device 1 as a computer by the control section 22 of the information processing device 1. This program is supplied to the information processing device 1 via a computer-readable information transmission medium such as a CD-ROM or DVD-ROM or via a communication network such as the Internet for example.

The user brings the user's own finger into contact with the detection surfaces of the front touch sensor 16 and the back touch sensor 18 of the information processing device 1 according to the present embodiment and moves the finger with the finger brought into contact with these detection surfaces to thereby carry out operation input to the information processing device 1. Furthermore, the user is allowed to carry out operation input to the information processing device 1 also by pressing down the buttons 20.

Moreover, in general, the user grasps the information processing device 1 according to the present embodiment with a single hand or both hands to carry out the above-described operation input. In addition, it is deemed that the user grasps the information processing device 1 according to the present embodiment laterally (grasps an edge along the shorter-side direction) in some cases and grasps it longitudinally (grasps an edge along the longitudinal direction) in other cases depending on the kind of application program being run by the information processing device 1 and so forth. Furthermore, it is deemed that, in grasping the information processing device 1 with a single hand, the user grasps it with the left hand in some cases and grasps it with the right hand in other cases.

In FIG. 4A, one example of the state in which the user is grasping the information processing device 1 laterally with the left hand is shown. In FIG. 4B, one example of the state in which the user is grasping the information processing device 1 longitudinally with the left hand is shown. In FIG. 4C, one example of the state in which the user is grasping the information processing device 1 laterally with the right hand is shown. In FIG. 4D, one example of the state in which the user is grasping the information processing device 1 longitudinally with the right hand is shown.

Furthermore, with the information processing device 1 according to the present embodiment, the user can carry out operation input by touching the front touch sensor 16 with a finger of the hand that is not grasping the information processing device 1 as shown in FIGS. 4A, 4B, 4C, and 4D. Although the user carries out operation input to the information processing device 1 with a finger in FIGS. 4A, 4B, 4C, and 4D, the operation input may be carried out to the information processing device 1 with a stylus or the like, of course. Furthermore, in the information processing device 1 according to the present embodiment, for example when the user touches the front touch sensor 16, information according to the touched position (e.g. information representing the contents of processing to be executed in response to separation of the finger from an icon displayed at the touched position) is displayed at a position on the display 14 associated with the touched position. Moreover, as shown in FIGS. 4A and 4B, when the information processing device 1 is being grasped by the left hand of the user, information as a display target is displayed in an upper left area on the basis of the position on the display 14 associated with the touched position of the front touch sensor 16. On the other hand, as shown in FIGS. 4C and 4D, when the information processing device 1 is being grasped by the right hand of the user, information as a display target is displayed in an upper right area on the basis of the position on the display 14 associated with the touched position of the front touch sensor 16.

In the information processing device 1 according to the present embodiment, the position of an object on the detection surface of the back touch sensor 18 is detected as described above at a predetermined time interval, and whether the user is grasping the information processing device 1 with the left hand or with the right hand is estimated based on the position detected by the back touch sensor 18. Then, when the information that should be displayed exists, the information processing device 1 displays this information in an area according to the estimation result in the display 14.

Here, one example of the flow of processing of determination of the hand with which the user is grasping the information processing device 1, executed at a predetermined time interval in the information processing device 1 according to the present embodiment, will be described with reference to a flow diagram exemplified in FIG. 5.

First, the detection result acceptor 40 accepts data representing the vertical direction from the direction detector 34 and accepts the coordinate value (X-coordinate value and Y-coordinate value) of at least one position detected from the back touch sensor 18 (S101) Then, the grasping hand determiner 42 generates a list in which the coordinate values of the positions accepted in the processing shown in S101 are arranged in increasing order of the Y-coordinate value (S102). Then, the grasping hand determiner 42 checks the number of coordinate values accepted in the processing shown in S101 (S103).

Then, if the number of coordinate values checked in the processing shown in S103 is 1 or 5 or more, the grasping hand determiner 42 decides the value of a left/right flag ("right" or "left") to be held in the left/right flag holder 44 by an average coordinate method to be described later (S104). If the number of coordinate values checked in the processing shown in S103 is 2, the grasping hand determiner 42 decides the value of the left/right flag to be held in the left/right flag holder 44 by a vector gradient method to be described later (S105). If the number of coordinate values checked in the processing shown in S103 is 3 or 4, the grasping hand determiner 42 decides the value of the left/right flag to be held in the left/right flag holder 44 by a vector cross product method to be described later (S106).

Then, the grasping hand determiner 42 makes the left/right flag holder 44 hold the left/right flag in which the value decided in the processing of any of S104 to S106 is set, in association with the detection date and time of the position coordinates (S107).

In the present processing example, if the number of coordinate values checked in the processing shown in S103 is 0, it is decided that the determination of the left/right flag is impossible (S108). In this case, the left/right flag is not held in the left/right flag holder 44.

Subsequently, upon the end of the processing shown in S107 or S108, the grasping hand determiner 42 extracts, among the left/right flags held in the left/right flag holder 44, a predetermined number of (e.g. 15) left/right flags starting from the one whose associated determination date and time is the newest sequentially. Then, if the number of left/right flags in which the set value is "left" is larger than the number of left/right flags in which the set value is "right," the grasping hand determiner 42 determines that the hand by which the information processing device 1 is being grasped by the user is the left. If not so, it determines that the hand by which the information processing device 1 is being grasped by the user is the right (S109).

In this manner, in the present embodiment, it is estimated whether the hand by which the information processing device 1 is being grasped is the left or right at a predetermined time interval.

Here, description will be made about details of the determination method of the value of the left/right flag, shown in the above-described S104 to S106.

First, details of the average coordinate method shown in the above-described S104 will be described. FIG. 6A is an explanatory diagram of the average coordinate method when the number of coordinate values checked in the processing shown in S103 is 1. FIG. 6B is an explanatory diagram of the average coordinate method when the number of coordinate values checked in the processing shown in S103 is 5 or more (5, in the example of FIG. 6B).

In the average coordinate method, first the display direction determiner 46 identifies the degree of the acute angle formed by the X-axis direction and the direction obtained by projecting, onto the XY plane, the vertical direction represented by the data accepted from the direction detector 34 in the processing shown in the above-described S101. Then, if this angle is equal to or larger than 45 degrees, the display direction determiner 46 determines that the information processing device 1 is being laterally grasped. If not so, it determines that the information processing device 1 is being longitudinally grasped. Suppose that it is determined that the information processing device 1 is being laterally grasped in the examples of FIGS. 6A and 6B.

As shown in FIG. 4B or 4D, when the information processing device 1 is being longitudinally grasped, the possibility that the X-axis direction is oriented in the vertical direction is high. Conversely, as shown in FIG. 4A or 4C, when the information processing device 1 is being laterally grasped, the possibility that the Y-axis direction is oriented in the vertical direction is high. From this, in the average coordinate method in the present embodiment, it is determined whether the information processing device 1 is being longitudinally grasped or laterally grasped based on the angle formed by the vertical direction and the X-axis direction as described above.

Then, if the number of coordinate values checked in the processing shown in S103 is 1 (in the example of FIG. 6A, the coordinate value is (x0, y0)), the grasping hand determiner 42 determines whether the difference (x0 - xc) between the X-coordinate value x0 of this coordinate value and an X-coordinate value xc of the center of the back touch sensor 18 (coordinate value is (xc, yc)) is 0 or positive or is negative.

Furthermore, if the number of coordinate values checked in the processing shown in S103 is 5 or more (in the example of FIG. 6B, the respective coordinate values are (x0, y0), (x1, y1), (x2, y2), (x3, y3), (x4, y4)), the grasping hand determiner 42 determines whether the difference (xa - xc) between an X-coordinate value xa of the centroid of the position group represented by these coordinate values (coordinate value is (xa, ya), wherein xa = (x0 + x1 + x2 + x3 + x4)/5, ya = (y0 + y1 + y2 + y3 + y4)/5) and the X-coordinate value xc of the center of the back touch sensor 18 is 0 or positive or is negative.

Then, when it is determined that the information processing device 1 is being laterally grasped, the grasping hand determiner 42 identifies the value of the above-described left/right flag as the "right" if the value of (x0 - xc) or the value of (xa - xc) is 0 or positive, and identifies the value of the above-described left/right flag as the "left" if it is negative. On the other hand, when it is determined that the information processing device 1 is being longitudinally grasped, the grasping hand determiner 42 identifies the value of the above-described left/right flag as the "left" if the value of (x0 - xc) or the value of (xa - xc) is 0 or positive, and identifies the value of the above-described left/right flag as the "right" if it is negative. In the example of FIG. 6A, the value of (x0 - xc) is negative and therefore the value of the above-described left/right flag is identified as the "left." In the example of FIG. 6B, the value of (xa - xc) is positive and therefore the value of the above-described left/right flag is identified as the "right."

As described above, in the present embodiment, the value of the left/right flag is identified depending on whether the detected position or the position of the centroid of the detected positions is more leftward or rightward than the center of the back touch sensor 18 as viewed from the front of the chassis 10 in the average coordinate method.

Furthermore, in the average coordinate method in the present embodiment, when the information processing device 1 is being laterally grasped, it is determined that the value of the left/right flag is the "left" if (x0 - xc) or (xa - xc) is negative based on the thought that, when the information processing device 1 is grasped by the left hand, there is a high possibility that the detected position or the position of the centroid of the detected positions is more leftward than the center of the back touch sensor 18 as viewed from the front of the chassis 10 as shown in FIG. 4A. On the other hand, it is determined that the value of the left/right flag is the "right" if (x0 - xc) or (xa - xc) is 0 or positive based on the thought that, when the information processing device 1 is grasped by the right hand, there is a high possibility that the detected position or the position of the centroid of the detected positions is more rightward than the center of the back touch sensor 18 as viewed from the front of the chassis 10 as shown in FIG. 4C.

Conversely, when the information processing device 1 is being longitudinally grasped, it is determined that the value of the left/right flag is the "left" if (x0 - xc) or (xa - xc) is 0 or positive based on the thought that, when the information processing device 1 is grasped by the left hand, there is a high possibility that the detected position or the position of the centroid of the detected positions is more rightward than the center of the back touch sensor 18 as shown in FIG. 4B. On the other hand, it is determined that the value of the left/right flag is the "left" if (x0 - xc) or (xa - xc) is negative based on the thought that, when the information processing device 1 is grasped by the right hand, there is a high possibility that the detected position or the position of the centroid of the detected positions is more leftward than the center of the back touch sensor 18 as shown in FIG. 4D.

Next, the vector gradient method shown in the above-described S105 will be described. FIG. 6C is an explanatory diagram of the vector gradient method.

Here, two coordinate values configuring the list generated in the processing shown in the above-described S102 are defined as (x0, y0) and (x1, y1), respectively (y0 < y1). In the vector gradient method, the grasping hand determiner 42 identifies the value of the above-described left/right flag as the "right" if the value of x1 - x0 is positive or 0, and identifies the value of the above-described left/right flag as the "left" if not so. In the example of FIG. 6C, the value of x1 - x0 is negative and therefore the value of the above-described left/right flag is identified as the "left."

In the vector gradient method in the present embodiment, it is determined that the value of the left/right flag is the "left" if the value of x1 - x0 is negative based on the thought that, when the information processing device 1 is grasped by the left hand, there is a high possibility that the detected two positions are arranged on a line from the upper left side toward the lower right side as viewed from the front of the chassis 10 (particularly the possibility is high when the index finger is in contact with the button 20 on the upper surface). Conversely, it is determined that the value of the left/right flag is the "right" if the value of x1 - x0 is 0 or positive based on the thought that, when the information processing device 1 is grasped by the right hand, there is a high possibility that the detected two positions are arranged on a line from the upper right side toward the lower left side as viewed from the front of the chassis 10 (particularly the possibility is high when the index finger is in contact with the button 20 on the upper surface).

Next, the vector cross product method shown in the above-described S105 will be described. FIG. 6D is an explanatory diagram of the vector cross product method when the number of coordinate values checked in the processing shown in S103 is 3. FIG. 6E is an explanatory diagram of the vector cross product method when the number of coordinate values checked in the processing shown in S103 is 4.

In the vector cross product method in the present embodiment, when the number of coordinate values checked in the processing shown in S103 is 3 (here, three coordinate values configuring the list generated in the processing shown in the above-described S102 are defined as (x0, y0), (x1, y1), and (x2, y2), respectively (y0 < y1 < y2)), the grasping hand determiner 42 identifies the value of the above-described left/right flag as the "left" if the value of the cross product between a vector (x1 - x0, y1 - y0) and a vector (x2 - x0, y2 - y0) is positive or 0, and identifies the value of the above-described left/right flag as the "right" if not so. In the example of FIG. 6D, the value of the cross product between the vector (x1 - x0, y1 - y0) and the vector (x2 - x0, y2 - y0) is positive and therefore the value of the above-described left/right flag is identified as the "left."

When the number of coordinate values checked in the processing shown in S103 is 4 (here, four coordinate values configuring the list generated in the processing shown in the above-described S102 are defined as (x0, y0), (x1, y1), (x2, y2), and (x3, y3), respectively (y0 < y1 < y2 < y3)), the grasping hand determiner 42 identifies the value of the above-described left/right flag as the "left" if the value of the cross product between a vector ((x1 + x2)/2 - x0, (y1 + y2)/2 - y0) and a vector (x3 - x0, y3 - y0) is positive or 0, and identifies the value of the above-described left/right flag as the "right" if not so. In the example of FIG. 6E, the value of the cross product between the vector ((xl + x2)/2 - x0, (y1 + y2)/2 - y0) and the vector (x3 - x0, y3 - y0) is negative and therefore the value of the above-described left/right flag is identified as the "right."

In the vector cross product method in the present embodiment, when the number of detected positions is 3, it is determined that the value of the left/right flag is the "left" if the value of the cross product between the vector (x1 - x0, y1 - y0) and the vector (x2 - x0, y2 - y0) is positive or 0 based on the thought that, when the information processing device 1 is grasped by the left hand, there is a high possibility that a rightward-convex line is obtained as viewed from the front of the chassis 10 if these three positions are sequentially connected from the uppermost position. Conversely, it is determined that the value of the left/right flag is the "right" if the value of the cross product between the vector (x1 - x0, y1 - y0) and the vector (x2 - x0, y2 - y0) is negative based on the thought that, when the information processing device 1 is grasped by the right hand, there is a high possibility that a leftward-convex line is obtained as viewed from the front of the chassis 10 if the above-described three positions are sequentially connected from the uppermost position.

Furthermore, in the vector cross product method in the present embodiment, when the number of detected positions is 4, it is determined that the value of the left/right flag is the "left" if the value of the cross product between the vector ((xl + x2)/2 - x0, (y1 + y2)/2 - y0) and the vector (x3 - x0, y3 - y0) is positive or 0 based on the thought that, when the information processing device 1 is grasped by the left hand, there is a high possibility that a rightward-convex line is obtained as viewed from the front of the chassis 10 if the uppermost position, the position of the midpoint between the second and third uppermost positions, and the lowermost position are sequentially connected from the uppermost position. Conversely, it is determined that the value of the left/right flag is the "right" if the value of the cross product between the vector ((xl + x2)/2 - x0, (y1 + y2)/2 - y0) and the vector (x3 - x0, y3 - y0) is negative based on the thought that, when the information processing device 1 is grasped by the right hand, there is a high possibility that a leftward-convex line is obtained as viewed from the front of the chassis 10 if the uppermost position, the position of the midpoint between the second and third uppermost positions, and the lowermost position are sequentially connected from the uppermost position.

Furthermore, in the present embodiment, when the user touches an image displayed on the display 14 included in the touch panel 12 with a finger or stylus, the position thereof is detected by the front touch sensor 16 and information according to this image (e.g. information representing contents shown by this image) is displayed on the display 14. At this time, the position at which the information is displayed changes depending on the detected position by the front touch sensor 16 and the recent determination results by the processing shown in the above-described S101 to S109.

Here, description will be made about display processing of information when the front touch sensor 16 is touched, executed in the information processing device 1 according to the present embodiment.

First, the area identifying section 48 accepts the coordinate value (X-coordinate value and Y-coordinate value) of a position detected from the front touch sensor 16. Then, the area identifying section 48 identifies the coordinate value of the position on the display 14 overlapping with this detected position (e.g. the same X-coordinate value and Y-coordinate value as those of this detected position). Here, the coordinate value of the identified position is defined as (xq, yq). Furthermore, the coordinate value of the lower left corner of the display 14 when the information processing device 1 is laterally grasped is defined as (x0, y0). The coordinate value of the lower right corner of the display 14 is defined as (x1, y1) . The coordinate value of the upper left corner of the display 14 is defined as (x2, y2). The coordinate value of the upper right corner of the display 14 is defined as (x3, y3).

Then, if the latest determination result of the processing shown in the above-described S101 to S109 is the left, the area identifying section 48 identifies, as a prohibited area 52, a rectangular area having the position shown by the coordinate value (x1, y1) and the position shown by the coordinate value (xq, yq) as vertexes opposed to each other on a diagonal. Furthermore, it identifies, as a first priority area 54-1, a rectangular area having the position shown by the coordinate value (x2, y2) and the position shown by the coordinate value (xq, yq) as vertexes opposed to each other on a diagonal. Moreover, it identifies, as a second priority area 54-2, a rectangular area having the position shown by the coordinate value (x0, y0) and the position shown by the coordinate value (xq, yq) as vertexes opposed to each other on a diagonal. In addition, it identifies, as a third priority area 54-3, a rectangular area having the position shown by the coordinate value (x3, y3) and the position shown by the coordinate value (xq, yq) as vertexes opposed to each other on a diagonal. In FIG. 7A, one example of the prohibited area 52 and the priority areas 54 when the latest determination result of the processing shown in the above-described S101 to S109 is the right is shown. In FIG. 7A, the prohibited area 52 is shown by hatched lines.

On the other hand, if the latest determination result of the processing shown in the above-described S101 to S109 is the right, the area identifying section 48 identifies, as the prohibited area 52, the rectangular area having the position shown by the coordinate value (x0, y0) and the position shown by the coordinate value (xq, yq) as vertexes opposed to each other on a diagonal. Furthermore, it identifies, as the first priority area 54-1, the rectangular area having the position shown by the coordinate value (x3, y3) and the position shown by the coordinate value (xq, yq) as vertexes opposed to each other on a diagonal. Moreover, it identifies, as the second priority area 54-2, the rectangular area having the position shown by the coordinate value (x1, y1) and the position shown by the coordinate value (xq, yq) as vertexes opposed to each other on a diagonal. In addition, it identifies, as the third priority area 54-3, the rectangular area having the position shown by the coordinate value (x2, y2) and the position shown by the coordinate value (xq, yq) as vertexes opposed to each other on a diagonal. In FIG. 7B, one example of the prohibited area 52 and the priority areas 54 when the latest determination result of the processing shown in the above-described S101 to S109 is the left is shown. In FIG. 7B, the prohibited area 52 is shown by hatched lines.

In this manner, in the present embodiment, one of the rectangular area having the position shown by the coordinate value (x1, y1) and the position shown by the coordinate value (xq, yq) as vertexes opposed to each other on a diagonal and the rectangular area having the position shown by the coordinate value (x0, y0) and the position shown by the coordinate value (xq, yq) as vertexes opposed to each other on a diagonal is identified as the prohibited area 52 based on the detected position by the back touch sensor 18.

Then, the display processing executor 50 causes the information that should be displayed to be display-output in the first priority area 54-1 of the display 14. Here, the display processing executor 50 may determine whether or not to display the information in the first priority area 54-1 in accordance with a predetermined rule. For example, when information being displayed already exists in the first priority area 54-1, the display processing executor 50 may decide not to display the information in the first priority area 54-1 and cause the information that should be displayed to be display-output in the second priority area 54-2. Furthermore, similarly, for example when information being displayed already exists also in the second priority area 54-2, the display processing executor 50 may decide not to display the information and cause the information that should be displayed to be display-output in the third priority area 54-3. Moreover, when plural pieces of the information that should be displayed exist, the display processing executor 50 may cause these pieces of information to be display-output in the first priority area 54-1 and the second priority area 54-2, respectively.

As described above, according to the present embodiment, when it is determined that the information processing device 1 is being grasped by the left hand based on the detected position by the back touch sensor 18, the lower right area of the display 14, which is likely to be hidden by the right hand operating the front touch sensor 16, is set as the prohibited area 52. When it is determined that the information processing device 1 is being grasped by the right hand, the lower left area of the display 14, which is likely to be hidden by the left hand operating the front touch sensor 16, is set as the prohibited area 52. Furthermore, in the present embodiment, information as a display target is displayed in an area outside the prohibited area 52 in the display 14. This can prevent the situation in which information as a display target is displayed at a position that is difficult for the user to see.

The present invention is not limited to the above-described embodiment.

For example, the correspondence relationship between the number of coordinate values detected by the back touch sensor 18 and the determination method of the value of the left/right flag is not limited to the above-described one. For example, the grasping hand determiner 42 may decide the value of the left/right flag based on a combination of determination results by two or more determination methods. Specifically, e.g. the following way may be employed. When the number of coordinate values detected by the back touch sensor 18 is 2, if the value of the left/right flag identified by the above-described vector gradient method corresponds with the value of the left/right flag identified by the above-described average coordinate method based on whether the midpoint between these two coordinate values is more leftward or rightward than the center of the display 14, the grasping hand determiner 42 decides this value as the value of the left/right flag. If not so, it decides that the determination is impossible.

Furthermore, the setting method of the prohibited area 52 is not limited to the above-described embodiment. For example, predetermined two areas in the display 14 may be set as candidates for the prohibited area 52 in advance. More specifically, for example, a quarter circle centered at the lower left corner of the display 14 with a predetermined radius and a quarter circle centered at the lower right corner of the display 14 with a predetermined radius may be set as candidates for the prohibited area 52 in advance. Furthermore, the area identifying section 48 may identify the right candidate for the prohibited area 52 as the prohibited area 52 if the latest determination result of the processing shown in the above-described S101 to S109 is the left, and may identify the left candidate for the prohibited area 52 as the prohibited area 52 if the latest determination result of the processing shown in the above-described S101 to S109 is the right.

Furthermore, for example, when the number of coordinate values detected by the back touch sensor 18 is 6 or more, the grasping hand determiner 42 may determine that the information processing device 1 is being grasped by both hands. At this time, without setting the prohibited area 52 in the display 14, the area identifying section 48 may identify the respective areas obtained by dividing the display 14 into three areas of upper, middle, and lower areas as the first priority area 54-1, the second priority area 54-2, and the third priority area 54-3 from the upper area sequentially.

Moreover, the grasping hand determiner 42 may make the left/right flag holder 44 hold the value of the left/right flag in association with the coordinate value detected by the back touch sensor 18 (or the coordinate value of the centroid of plural positions detected by the back touch sensor 18). Furthermore, when determining the value of the left/right flag by the above-described average coordinate method, the information processing device 1 may determine that the information processing device 1 is being laterally grasped if the average of the X-coordinate values associated with the left/right flag whose value is the "left" is smaller than that of the X-coordinate values associated with the left/right flag whose value is the "right," and may determine that the information processing device 1 is being longitudinally grasped if not so.

In addition, the grasping hand determiner 42 does not need to determine the hand by which the information processing device 1 is being grasped based on a history of the past determination results in the above-described S104 to S107 like the above-described embodiment, and may determine the hand by which the information processing device 1 is being grasped based on the latest detected position by the back touch sensor 18.

## Claims

1. An information processing device comprising:
a chassis (10) with a front surface and a back surface, wherein the chassis extends in a width direction (X), a height direction (Y) and a depth direction (Z);
a display section (14) on the front surface (14) of the chassis (10);
a front touch sensor (16) that overlaps the display section (14) and is adapted to detect a position of an object on a front detection surface of the front touch sensor (16);
a back touch sensor (18) on the back surface of the chassis (10) that is disposed opposed to the front touch sensor (16) and adapted to detect a position of an object on a back detection surface of the back touch sensor (18); and
a control section (22) being connected to the front touch sensor (16) and the back touch sensor (18) via an input interface (32),
**characterized in that**
the control section (22) is adapted to identify, as a prohibited area (52), one of two areas that each occupy a part of the display section (14) and are disposed on a lower left or lower right area of the display section (14) based on at least one detected position (S109) by the back touch sensor (18), said at least one detected position (S109) determines whether the information processing device (10) is grasped by a left or right hand of a user, the prohibited area being set as the area that is hidden by the other operating hand of the user, and
the control section (22) is adapted to cause information as a display target to be displayed in one or more priority areas (54-1, 54-2, 54-3) outside the prohibited area (52) in the display section (14), and wherein
a correspondence relationship between the detected position (S109) by the back touch sensor (18) and the prohibited area (52) identified from the two areas is changed depending on a determination by an orientation detector (34) that is adapted to determine whether a user grasps the device laterally along the height direction (Y) being associated to a shorter-side direction of the display section (14) or longitudinally along the width direction (X) being associated to a longer-side direction of the display section (14).

2. The information processing device according to claim 1, wherein
the control section is adapted to identify one of the two areas as the prohibited area based on whether one detected position by the back touch sensor exists in an area in the back touch sensor opposed to left half of the front touch sensor or exists in an area in the back touch sensor opposed to right half of the front touch sensor.

3. The information processing device according to claim 2, wherein
the control section is adapted to identify the lower left area, of the two areas, as the prohibited area if the at least one detected position by the back touch sensor (18) exists in the right half area in the back touch sensor (18) as viewed from the front of the chassis (10) and to identify the lower right area, of the two areas, as the prohibited area if the at least one detected position by the back touch sensor (18) exists in the left half area in the back touch sensor (18) as viewed from the front of the chassis (10).

4. The information processing device according to any of the preceding claims, wherein the detection surface of the back touch sensor is rectangular and has a length in width direction (X) that is longer than the according length of the display section (14) and has width in height direction (Y) that is shorter than the according width of the display section,

5. The information processing device according to any of the preceding claims, further comprising buttons (20) provided on the front surface and on the right and left sides of the display section (14).

6. A control method of an information processing device according to claim the control method being **characterized by** the steps:
identifying, as a prohibited area (52), one of two areas that each occupy a part of the display section (14) and are disposed on a lower left or lower right area of the display section (14) based on at least one detected position (S109) by the back touch sensor (18), said at least one detected position (S109) determines whether the information processing device (10) is grasped by a left or right hand of a user, the prohibited area is set as the area that is hidden by the other operating hand of the user, and
causing information as a display target to be displayed in one or more priority areas (54-1, 54-2, 54-3) outside the prohibited area (52) in the display section (14).

7. A program for an information processing device, said program being adapted to execute the control method according to claim 6, when executed in the processor of a computer.

8. A computer-readable information storing medium that is adapted to store the program according to claim 7.

## Patentansprüche

1. Informationsverarbeitungsvorrichtung, die Folgendes umfasst:
ein Gehäuse (10) mit einer vorderen Oberfläche und einer hinteren Oberfläche, wobei sich das Gehäuse in eine Breitenrichtung (X), eine Höhenrichtung (Y) und eine Tiefenrichtung (Z) erstreckt;
einen Anzeigeabschnitt (14) auf der vorderen Oberfläche (14) des Gehäuses (10);
einen vorderen Berührungssensor (16), der den Anzeigeabschnitt (14) überschneidet und eingerichtet ist zum Detektieren einer Position eines Objekts auf einer vorderen Detektionsoberfläche des vorderen Berührungssensors (16);
einen hinteren Berührungssensor (18) auf der hinteren Oberfläche des Gehäuses (10), der dem vorderen Berührungssensor (16) entgegengesetzt angeordnet ist und eingerichtet ist zum Detektieren einer Position eines Objekts auf einer hinteren Detektionsoberfläche des hinteren Berührungssensors (18); und
einen Steuerabschnitt (22), der über eine Eingabeschnittstelle (32) mit dem vorderen Berührungssensor (16) und dem hinteren Berührungssensor (18) verbunden ist,
**dadurch gekennzeichnet, dass**
der Steuerabschnitt (22) eingerichtet ist zum Identifizieren, als einen gesperrten Bereich (52), eines von zwei Bereichen, die jeweils einen Teil des Anzeigeabschnitts (14) einnehmen und in einem unteren linken oder einem unteren rechten Bereich des Anzeigeabschnitts (14) angeordnet sind, basierend auf mindestens einer detektierten Position (S109) durch den hinteren Berührungssensor (18), wobei die mindestens eine detektierte Position (S109) bestimmt, ob die Informationsverarbeitungsvorrichtung (10) durch eine linke oder eine rechte Hand eines Benutzers gehalten wird, wobei der gesperrte Bereich als der Bereich eingestellt wird, der durch die andere bedienende Hand des Benutzers verdeckt wird, und
der Steuerabschnitt (22) dazu eingerichtet ist, zu veranlassen, dass Informationen als ein Anzeigeziel in einem oder mehreren Prioritätsbereichen (54-1, 54-2, 54-3) außerhalb des gesperrten Bereichs (52) in dem Anzeigeabschnitt (14) angezeigt werden, und wobei
eine Entsprechungsbeziehung zwischen der detektierten Position (S109) durch den hinteren Berührungssensor (18) und dem aus den zwei Bereichen identifizierten gesperrten Bereich (52) abhängig von einer Bestimmung durch einen Orientierungsdetektor (34) geändert wird, der eingerichtet ist zum Bestimmen, ob ein Benutzer die Vorrichtung seitlich entlang der Höhenrichtung (Y), die mit einer Richtung einer kürzeren Seite des Anzeigeabschnitts (14) assoziiert ist, oder längs entlang der Breitenrichtung (X), die mit einer Richtung einer längeren Seite des Anzeigeabschnitts (14) assoziiert ist, hält.

2. Informationsverarbeitungsvorrichtung nach Anspruch 1, wobei
der Steuerabschnitt eingerichtet ist zum Identifizieren eines der zwei Bereiche als den gesperrten Bereich basierend darauf, ob eine detektierte Position durch den hinteren Berührungssensor in einem der linken Hälfte des vorderen Berührungssensors entgegengesetzten Bereich in dem hinteren Berührungssensor vorliegt oder in einem der rechten Hälfte des vorderen Berührungssensors entgegengesetzten Bereich in dem hinteren Berührungssensor vorliegt.

3. Informationsverarbeitungsvorrichtung nach Anspruch 2, wobei
der Steuerabschnitt eingerichtet ist zum Identifizieren des unteren linken Bereichs der zwei Bereiche als den gesperrten Bereich, falls die mindestens eine detektierte Position durch den hinteren Berührungssensor (18) im Bereich der rechten Hälfte in dem hinteren Berührungssensor (18) bei Betrachtung von der Vorderseite des Gehäuses (10) vorliegt, und zum Identifizieren des unteren rechten Bereichs der zwei Bereiche als den gesperrten Bereich, falls die mindestens eine detektierte Position durch den hinteren Berührungssensor (18) im Bereich der linken Hälfte in dem hinteren Berührungssensor (18) bei Betrachtung von der Vorderseite des Gehäuses (10) vorliegt.

4. Informationsverarbeitungsvorrichtung nach einem der vorhergehenden Ansprüche, wobei die Detektionsoberfläche des hinteren Berührungssensors rechteckig ist und eine Länge in der Breitenrichtung (X) aufweist, die länger als die entsprechende Länge des Anzeigeabschnitts (14) ist, und eine Breite in der Höhenrichtung (Y) aufweist, die kürzer als die entsprechende Breite des Anzeigeabschnitts ist.

5. Informationsverarbeitungsvorrichtung nach einem der vorhergehenden Ansprüche, die ferner Tasten (20) umfasst, die auf der vorderen Oberfläche und auf der rechten und der linken Seite des Anzeigeabschnitts (14) bereitgestellt sind.

6. Steuerverfahren einer Informationsverarbeitungsvorrichtung nach Anspruch 1, wobei das Steuerverfahren durch die folgenden Schritte gekennzeichnet ist:
Identifizieren, als einen gesperrten Bereich (52), eines von zwei Bereichen, die jeweils einen Teil des Anzeigeabschnitts (14) einnehmen und in einem unteren linken oder einem unteren rechten Bereich des Anzeigeabschnitts (14) angeordnet sind, basierend auf mindestens einer detektierten Position (S109) durch den hinteren Berührungssensor (18), wobei die mindestens eine detektierte Position (S109) bestimmt, ob die Informationsverarbeitungsvorrichtung (10) durch eine linke oder eine rechte Hand eines Benutzers gehalten wird, wobei der gesperrte Bereich als der Bereich eingestellt wird, der durch die andere bedienende Hand des Benutzers verdeckt wird, und
Veranlassen, dass Informationen als ein Anzeigeziel in einem oder mehreren Prioritätsbereichen (54-1, 54-2, 54-3) außerhalb des gesperrten Bereichs (52) in dem Anzeigeabschnitt (14) angezeigt werden.

7. Programm für eine Informationsverarbeitungsvorrichtung, wobei das Programm eingerichtet ist zum Ausführen des Steuerverfahrens nach Anspruch 6, wenn es in dem Prozessor eines Computers ausgeführt wird.

8. Computerlesbares Informationsspeicherungsmedium, das zum Speichern des Programms nach Anspruch 7 eingerichtet ist.

## Revendications

1. Dispositif de traitement d'informations comprenant :
un boîtier (10) avec une surface avant et une surface arrière, le boîtier s'étendant dans un sens de la largeur (X), un sens de la hauteur (Y) et un sens de la profondeur (Z) ;
une section d'affichage (14) sur la surface avant (14) du boîtier (10) ;
un capteur tactile avant (16) qui chevauche la section d'affichage (14) et est conçu pour détecter une position d'un objet sur une surface de détection avant du capteur tactile avant (16) ;
un capteur tactile arrière (18) sur la surface arrière du boîtier (10) qui est disposé à l'opposé du capteur tactile avant (16) et est conçu pour détecter une position d'un objet sur une surface de détection arrière du capteur tactile arrière (18) ; et
une section de commande (22) étant connectée au capteur tactile avant (16) et au capteur tactile arrière (18) via une interface d'entrée (32),
**caractérisé en ce que**
la section de commande (22) est conçue pour identifier, en tant que zone interdite (52), l'une de deux zones qui chacune occupe une partie de la section d'affichage (14) et sont disposées sur une zone gauche inférieure ou droite inférieure de la section d'affichage (14) sur la base d'au moins une position détectée (S109) par le capteur tactile arrière (18), ladite au moins une position détectée (S109) déterminant si le dispositif de traitement d'informations (10) est agrippé par une main gauche ou droite d'un utilisateur, la zone interdite étant réglée comme étant la zone qui est dissimulée par l'autre main d'utilisation de l'utilisateur, et
la section de commande (22) est conçue pour que des informations en tant que cible d'affichage soient affichées dans une ou plusieurs zones prioritaires (54-1, 54-2, 54-3) à l'extérieur de la zone interdite (52) dans la section d'affichage (14), et dans lequel
une relation de correspondance entre la position détectée (S109) par le capteur tactile arrière (18) et la zone interdite (52) identifiée à partir des deux zones est changée en dépendance d'une détermination faite par un détecteur d'orientation (34) qui est conçu pour déterminer si un utilisateur agrippe le dispositif latéralement le long du sens de la hauteur (Y) qui est associé à un sens de côté plus court de la section d'affichage (14) ou longitudinalement le long du sens de la largeur (X) qui est associé à un sens de côté plus long de la section d'affichage (14).

2. Dispositif de traitement d'informations selon la revendication 1, dans lequel
la section de commande est conçue pour identifier l'une des deux zones comme étant la zone interdite sur la base du fait de savoir si une position détectée par le capteur tactile arrière existe dans une zone du capteur tactile arrière à l'opposé de la moitié gauche du capteur tactile avant ou existe dans une zone dans le capteur tactile arrière à l'opposé de la moitié droite du capteur tactile avant.

3. Dispositif de traitement d'informations selon la revendication 2, dans lequel
la section de commande est conçue pour identifier la zone gauche inférieure, des deux zones, comme étant la zone interdite si l'au moins une position détectée par le capteur tactile arrière (18) existe dans la zone de moitié droite dans le capteur tactile arrière (18) telle qu'elle est vue depuis l'avant du boîtier (10) et pour identifier la zone droite inférieure, des deux zones, comme étant la zone interdite si l'au moins une position détectée par le capteur tactile arrière (18) existe dans la zone de moitié gauche dans le capteur tactile arrière (18) telle qu'elle est vue depuis l'avant du boîtier (10).

4. Dispositif de traitement d'informations selon n'importe lesquelles des revendications précédentes, dans lequel la surface de détection du capteur tactile arrière est rectangulaire et a une longueur dans le sens de la largeur (X) qui est plus longue que la longueur concordante de la section d'affichage (14) et a une largeur dans le sens de la hauteur (Y) qui est plus courte que la largeur concordante de la section d'affichage.

5. Dispositif de traitement d'informations selon n'importe lesquelles des revendications précédentes, comprenant en outre des boutons (20) prévus sur la surface avant et sur les côtés droit et gauche de la section d'affichage (14).

6. Procédé de commande d'un dispositif de traitement d'informations selon la revendication 1, le procédé de commande étant **caractérisé par** les étapes :
d'identification, en tant que zone interdite (52), de l'une de deux zones qui chacune occupe une partie de la section d'affichage (14) et sont disposées sur une zone gauche inférieure ou droite inférieure de la section d'affichage (14) sur la base d'au moins une position détectée (S109) par le capteur tactile arrière (18), ladite au moins une position détectée (S109) déterminant si le dispositif de traitement d'informations (10) est agrippé par une main gauche ou droite d'un utilisateur, la zone interdite étant réglée comme étant la zone qui est dissimulée par l'autre main d'utilisation de l'utilisateur, et
d'obtention de l'affichage d'informations en tant que cible d'affichage dans une ou plusieurs zones prioritaires (54-1, 54-2, 54-3) à l'extérieur de la zone interdite (52) dans la section d'affichage (14).

7. Programme pour un dispositif de traitement d'informations, ledit programme étant conçu pour exécuter le procédé de commande selon la revendication 6, lorsqu'il est exécuté dans le processeur d'un ordinateur.

8. Support de stockage d'informations lisibles par ordinateur qui est conçu pour stocker le programme selon la revendication 7.
